# EUROPÄISCHE PATENTANMELDUNG

(11) **EP 2 648 058 A1**
(43) Veröffentlichungstag der Anmeldung: **09.10.2013**
(21) Anmeldenummer: 12163071.9
(22) Anmeldetag: 04.04.2012
(51) Int. Cl.: G05B 19/4097

(54) **Verfahren zum Betrieb einer Bearbeitungsmaschine, Computerprogramm zur Ausführung eines solchen Verfahrens und Steuerungseinrichtung für eine Bearbeitungsmaschine**

(71) Anmelder: Siemens Aktiengesellschaft, 80333 München (DE)
(72) Erfinder: Hertinger, Klaus, 91056 Erlangen (DE)

(57) **Zusammenfassung**

Die Erfindung betrifft zuvorderst ein Verfahren zum Betrieb einer Bearbeitungsmaschine zur formgebenden Bearbeitung von Werkstücken (10), wobei die Bearbeitungsmaschine und die davon umfassten Achsen von einer Steuerungseinrichtung (24) gesteuert werden, wobei die Steuerungseinrichtung (24) eine Verarbeitungseinheit (30) und einen Speicher (32), in den ein NC-Programm (34) mit einer Beschreibung von Bewegungsbahnen (16) für die formgebende Bearbeitung des jeweiligen Werkstücks (10) geladen ist, umfasst, wobei bei der formgebenden Bearbeitung des jeweiligen Werkstücks (10) unter Kontrolle der Steuerungseinrichtung (24) sukzessive benachbarte Bewegungsbahnen (16) abgefahren werden und wobei beim Abfahren einer Bewegungsbahn (16) Geometriedaten benachbarter Bewegungsbahnen (16) berücksichtigt werden.

## Beschreibung

Die vorliegende Erfindung betrifft ein Verfahren zum Betrieb einer Bearbeitungsmaschine zur formgebenden Bearbeitung von Werkstücken, also insbesondere eine sogenannte spanende Bearbeitung, wie sie sich beim Fräsen, Drehen, Bohren, usw. ergibt. Die Erfindung betrifft im Weiteren ein Computerprogramm zur Ausführung oder Implementierung eines Verfahrens zum Betrieb einer Bearbeitungsmaschine sowie eine Steuerungseinrichtung für eine solche Bearbeitungsmaschine, mit der das Verfahren, insbesondere das Computerprogramm, ausgeführt wird.

Bearbeitungsmaschinen der eingangs genannten Art sind an sich bekannt. Exemplarisch soll im Folgenden von einer Fräsmaschine als Beispiel für eine Bearbeitungsmaschine ausgegangen werden. Bei einer solchen Fräsmaschine ist bekannt, dass für ein zu fertigendes Werkstück, also zum Beispiel ein aus einem Materialblock oder einem Grundkörper herauszuarbeitendes Modell, für das Modell sogenannte CAD- oder CAM-Daten vorliegen, dass diese entweder für die Bearbeitungsmaschine geeignet aufbereitet werden oder dass die Bearbeitungsmaschine selbst eine solche Aufbereitung übernimmt, wobei das Ergebnis der Aufbereitung ein oder mehrere Bewegungsbahnen, üblicherweise eine Vielzahl von Bewegungsbahnen ist beziehungsweise sind, die bei einer Führung eines jeweiligen Werkzeugs, also zum Beispiel eines Fräsers, entlang der oder jeder Bewegungsbahn zu einem Materialabtrag bei dem Materialblock / Grundkörper und damit schließlich zu dem aus diesem herauszuarbeitenden Modell führen.

Diese Bewegungsbahnen werden bei Bearbeitungsmaschinen, die eine formgebende Bearbeitung zum Erhalt eines Werkstücks durchführen, auch als Abtragsbahnen bezeichnet.

Bisher ist der Betrieb von Bearbeitungsmaschinen beim sukzessiven Abfahren einzelner Abtragsbahnen allerdings noch nicht optimal, weil vorhandene Informationen über örtlich benachbarte Abtragsbahnen über die involvierten Toolketten (CAD/CAM) nicht an die jeweilige Bearbeitungsmaschine weitergegeben werden. Zudem werden Einflüsse, die sich während der Bearbeitung des jeweiligen Werkstücks ergeben - im Folgenden als Echtzeiteinflüsse bezeichnet - ignoriert. Dies führt beim Bearbeiten von örtlich benachbarten Abtragsbahnen zu suboptimalen Ergebnissen, die insbesondere bei Freiformflächen stören und zu einer Notwendigkeit aufwändiger Nachbearbeitungen führen können.

Bisher erfolgte eine geometrische Betrachtung des später erforderlichen Betriebs der Bearbeitungsmaschine auf der CAD-/CAM-Seite, indem dort entsprechend einer jeweils gewählten Abtragsstrategie und einem jeweils parametrierten oder in sonst geeigneter Art und Weise angegebenen Werkzeug die Abtragsbahnen zur Bearbeitung an der Maschine, also zum Abfahren durch die Bearbeitungsmaschine, berechnet oder in sonst geeigneter Art und Weise generiert wurden. Dabei ist das Ergebnis eine Sequenz von Teilprogrammsätzen für den sogenannten Tool Center Point (TCP) der Bearbeitungsmaschine, also eine durch einzelne Stützstellen in Form von Achspositionen und dergleichen vorgegebene Trajektorie (Bewegungsbahn / Abtragsbahn) des jeweiligen Werkzeugs der Bearbeitungsmaschine. Flächeninformationen werden hierbei bisher nicht weitergegeben. Verschiedene Steuerungsverfahren versuchen, die Sequenz von Teileprogrammsätzen gewissermaßen zu verschleifen, so dass möglichst weiche Übergänge beim Abfahren in der jeweiligen Bewegungsrichtung erfolgen. Ein solches Verschleifen kann zum Beispiel erfolgen, indem die einzelnen Abtragsbahnen nebeneinander so angeordnet sind, dass sich für das jeweilige Werkzeug ein gewisser Überlapp ergibt. Eine Ausrichtung zu Nachbarbahnen im Raum (zur Seite und/oder Tiefe) ist nicht bekannt, da keine Raum- oder Flächeninformationen vorliegen oder mitgeführt werden.

Eine Aufgabe der vorliegenden Erfindung besteht entsprechend darin, ein Verfahren zum Betrieb einer Bearbeitungsmaschine der und ein Computerprogramm zur Implementierung eines solchen Verfahrens zum Betrieb einer Bearbeitungsmaschine anzugeben, bei dem die oben genannten Nachteile vermieden werden oder zumindest hinsichtlich ihrer Auswirkungen reduziert sind.

Diese Aufgabe wird erfindungsgemäß mit einem Verfahren zum Betrieb einer Bearbeitungsmaschine der eingangs genannten Art mit den Merkmalen des Anspruchs 1 gelöst. Dazu ist bei einem Verfahren zum Betrieb einer Bearbeitungsmaschine zur formgebenden Bearbeitung von Werkstücken, wobei die Bearbeitungsmaschine und die davon umfassten Achsen von einer Steuerungseinrichtung gesteuert wird beziehungsweise werden, wobei die Steuerungseinrichtung eine Verarbeitungseinheit in Form von oder nach Art eines Mikroprozessors und einen Speicher umfasst, in den ein sogenanntes NC-Programm mit einer Beschreibung von Bewegungsbahnen für die formgebende Bearbeitung des jeweiligen Werkstücks geladen ist, wobei bei der formgebenden Bearbeitung des jeweiligen Werkstücks unter Kontrolle der Steuerungseinrichtung sukzessive benachbarte Bewegungsbahnen, also Abtragsbahnen, abgefahren werden, vorgesehen, dass beim Abfahren einer Bewegungs- oder Abtragsbahn Geometriedaten benachbarter Bewegungs-/Abtragsbahnen berücksichtigt werden.

Die oben genannte Aufgabe wird auch gelöst mit einer Steuerungseinrichtung für eine solche Bearbeitungsmaschine. Diese ermöglicht einen Betrieb einer Bearbeitungsmaschine wie hier und nachfolgend beschrieben, indem sie eine Verarbeitungseinheit und einen Speicher umfasst, in den als Mittel zum Ausführen eines solchen Verfahrens und ggf. einzelner Ausgestaltungen ein Computerprogramm geladen ist, das im Betrieb der Steuerungseinrichtung durch deren Verarbeitungseinheit ausgeführt wird und damit eine Ausführung eines Verfahrens zum Betrieb einer Bearbeitungsmaschine wie hier und nachfolgend beschrieben bewirkt.

Die Erfindung ist damit zumindest bei einer speziellen Ausführungsform in Software implementiert. Die Erfindung ist insoweit einerseits auch ein Computerprogramm mit durch einen Computer, also zum Beispiel die oben genannte Steuerungseinrichtung, ausführbaren Programmcodeanweisungen und andererseits ein Speichermedium mit einem derartigen Computerprogramm sowie schließlich auch eine Steuerungseinrichtung für eine Bearbeitungsmaschine oder insgesamt eine Bearbeitungsmaschine mit einer solchen Steuerungseinrichtung, in dessen Speicher als Mittel zur Durchführung des Verfahrens und seiner Ausgestaltungen ein solches Computerprogramm geladen oder ladbar ist.

Der Vorteil der Erfindung besteht darin, dass mit der Berücksichtigung von Geometriedaten benachbarter Bewegungsbahnen beim Abfahren einer Bewegungsbahn ein Werkstück mit besseren Konturen entsteht, speziell wenn das Werkstück Freiformflächen aufweist und damit bisher häufig unvermeidbare Nachbearbeitungen entbehrlich werden oder zumindest hinsichtlich des damit verbundenen Aufwands deutlich reduziert sind.

Der Ansatz gemäß der Erfindung geht davon aus, dass in der Steuerungseinrichtung der Bearbeitungsmaschine in Echtzeit beim Abfahren der jeweiligen Abtragsbahnen als Basis für die Geometriedaten zum Beispiel ein geometrisches Modell des Werkstücks, zumindest des Restfertigteils, mitgeführt wird, das darüber hinaus um Dynamik-, Kompensations- und/oder Technologieattribute sowie Änderungen solcher Attribute an Berührungspunkten/-flächen ergänzt werden kann. Es ist dabei nicht notwendig, eine komplette Geometriebeschreibung aus einer vorangehenden Erstellung von Daten zu dem jeweiligen Werkstück im Rahmen der Bearbeitung im CAD-/CAM-System der Steuerungseinrichtung zur Verfügung stellen, sondern es reicht aus, dass auf Basis angenommener oder bekannt gemachter Rohteilgeometrien die Steuerungseinrichtung mittelbar oder unmittelbar ein 3D-Modell des Werkstücks/Restfertigteils aus den real abgefahrenen Koordinaten mitführt. Diese Geometriedaten oder das mitgeführte Modell liefern bzw. liefert eine Basis für die Generierung der jeweiligen Sollbahnen von noch abzufahrenden Abtragsbahnen. Diese werden, zum Beispiel nach Verarbeitung mit einem "Verschleifalgorithmus" generiert, der die jeweiligen Sollbahnen mit Blick auf die Nachbarbahnen anpasst, insbesondere geometrisch mit Blick auf die Nachbarbahnen und/oder dynamisch und technologisch mit Hinblick auf für solche Nachbarbahnen mit Ortsbezug mitgeführte Dynamik-, Kompensations- und/oder Technologieattribute.

Als Dynamikattribute werden hierbei einerseits die Führungsgröße betreffende und für die Bahn- und/oder Achsdynamik relevante Größen verstanden und andererseits die eine Behandlung der Bearbeitungskräfte ("Störgrößen") betreffenden Achsantriebsregelungsparameter. Als Technologieattribute werden beispielsweise Informationen zur Vor- oder Endbearbeitung aber auch im Hinblick auf zum Beispiel engere Toleranzen bei Passungen und dergleichen verstanden. Als Kompensationsattribute werden auch solche Daten verstanden, wie sie für eine Kompensation von Maschinenfehlern oder Umgebungseinflüssen, wie zum Beispiel Temperatur und Durchhang, herangezogen werden können, bis hin zu Volumenkompensationen und/oder positionsabhängigen Korrekturen bei Sonderkinematiken (z.B. Gelenkabbildungsfehler, Stablängenkorrekturen).

Die oben beschriebenen Dynamik-, Kompensations- und Technologieattribute werden im Folgenden mitunter einzeln oder zusammen kurz nur als Attribute bezeichnet. Die Ergänzung eines geometrischen Modells um solche Attribute wird als Attributierung des Modells bezeichnet. Kurz gefasst kommen zur Attributierung eines Modells alle geometrischen Einflüsse in Betracht, die der Steuerungseinrichtung der jeweiligen Bearbeitungsmaschine mitgeteilt oder/und von der Steuerung im Zuge des Abarbeitungsfortschritts hinzugefügt werden werden.

Der Vorteil der Erfindung besteht darin, dass die mitgeführten Geometriedaten essentielle, bisher nicht vorhandene Zusatzinformationen liefern, die in vielerlei Hinsicht Verbesserungen versprechen. Da neben den Geometriedaten einer jeweiligen Bearbeitungsbahn und daraus resultierenden Bewegungs- / Bahnrichtungen auch örtlich benachbarte Daten herangezogen werden, sind hinsichtlich des resultierenden Werkstücks homogenere geometrische Verläufe, homogenere Oberflächenqualitäten, insbesondere im Hinblick auf eine Rautiefe und/oder ein Schnittbild, homogenere Technologie- / Prozessparameter, insbesondere im Hinblick auf ein jeweiliges Abtragsvolumen / eine Abtragsleistung und/oder momentane Schnittverhältnisse und dergleichen zu erwarten. Hinsichtlich der Technologie-/Prozessparameter ist auch mit homogeneren Prozessgrößen, zum Beispiel im Hinblick auf eine Schmierung des jeweils verwendeten Werkzeugs zu rechnen, mit in der Folge längeren Standzeiten sowie verlässlicheren und besser vorhersehbaren Aussagen über das Prozessverhalten der jeweiligen Bearbeitungsmaschine.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin. Sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Bei einer Ausführungsform des Verfahrens ist vorgesehen, dass beim Abfahren einer Bewegungsbahn zusätzlich oder alternativ mit Ortsbezug gespeicherte Echtzeiteinflüsse vorangehender Bewegungsbahnen berücksichtigt werden. Solche Echtzeiteinflüsse sind zum Beispiel Maßnahmen, wie sie durch die Steuerungseinrichtung der jeweiligen Bearbeitungsmaschine erfolgen, wenn über CAD/CAM sogenannte G1-Punktefolgen oder G2/G3-Punktefolgen ausgegeben werden und die Steuerungseinrichtung geometrische Behandlungen vornimmt, insbesondere ein sogenanntes Verschleifen, also das Verbinden der einzelnen Punkte der Punktfolge mit sogenannten Splines, oder wenn über CAD/CAM sogenannte G1/G2-Übergänge ohne Berücksichtigung des Beschleunigungssprungs bei tangentialen Übergängen ausgegeben werden und die Steuerungseinrichtung geometrische Behandlungen, insbesondere ein Verschleifen, vornimmt. Des Weiteren können sich solche Echtzeiteinflüsse auch ergeben, wenn auf den Betrieb der Bearbeitungsmaschine während des laufenden Betriebs Einfluss genommen wird, zum Beispiel durch Veränderung von Dynamik-, Kompensations- oder Technologieparametern. Schließlich können sich solche Echtzeiteinflüsse auch aufgrund von geometriebestimmenden Werten ergeben, wie zum Beispiel einem mit Ortsbezug erfassten Verschleiß des jeweiligen Werkzeugs. Als Echtzeiteinflüsse sollen aber auch unvorhergesehene, zumeist minimale Abweichungen von einer Sollbahn verstanden werden, wie sie sich an Materialgrenzen ergeben können, aber auch Abweichungen, die sich aufgrund der Dynamik der Bearbeitungsmaschine ergeben, zum Beispiel Überschwinger und dadurch begründete Bahnabweichungen bei abrupt wechselnden Bahnrichtungen und dergleichen.

Solche Echtzeiteinflüsse können, wenn sie beim Abfahren einer Bewegungsbahn mit Ortsbezug gespeichert sind, beim Abfahren einer benachbarten Bewegungsbahn berücksichtigt werden, so dass sich die oben genannten homogenen Verläufe auch im Hinblick auf solche Echtzeiteinflüsse ergeben.

Bei einer Ausführungsform des Verfahrens ist vorgesehen, dass zum Berücksichtigen von Geometriedaten benachbarter Bewegungsbahnen die Steuerungseinrichtung im NC-Programm oder in einer für das NC-Programm zugänglichen Datenbasis ein 3D-Modell des jeweiligen Werkstücks oder Restfertigteils mitführt. Als 3D-Modell des jeweiligen Werkstücks oder Restfertigteils ist dabei auch ein 3D-Modell eines Zwischenfertigteils zu verstehen, also eines Teils, das weder das fertige Werkstück noch den Rohling und vielmehr den derzeit bearbeiteten Rohling mit daran bereits erfolgten Schnitten und entsprechendem Materialabtrag darstellt. Dieses 3D-Modell umfasst auch eventuelle Attribute der oben beschriebenen Art, die während der Bearbeitung hinzugefügt wurden oder die die Steuerung während der Bearbeitung hinzugefügt hat. Anhand eines solchen 3D-Modells ergeben sich in Bezug auf eine aktuelle Bewegungsbahn Informationen im Hinblick auf benachbarte Bewegungsbahnen, speziell im Hinblick auf bereits abgefahrene Bewegungsbahnen, so dass diese Informationen bei der Generierung der Bewegungsdaten für die aktuelle Bewegungsbahn berücksichtigt werden können, um die oben beschriebenen homogenen geometrischen Verläufe oder homogene Verläufe von Abtragsvolumen und/oder Abtragsleistung zu erreichen.

Bei einer weiteren Ausführungsform des Verfahrens ist vorgesehen, dass zum Berücksichtigen von Geometriedaten benachbarter Bewegungsbahnen die Steuerungseinrichtung Dynamik- und/oder Technologieattribute zu bereits abgefahrenen Bewegungsbahnen mitführt und dass beim Abfahren einer Bewegungsbahn zumindest diese Dynamik- und/oder Technologieattribute vorangehender Bewegungsbahnen, insbesondere der unmittelbar vorangehenden Bewegungsbahn, berücksichtigt werden.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das oder jedes Ausführungsbeispiel ist nicht als Einschränkung der Erfindung zu verstehen. Vielmehr sind im Rahmen der vorliegenden Offenbarung auch Änderungen und Ergänzungen möglich, wie sie zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen
- FIG 1: ein Werkstück, das mit einer selbst nicht dargestellten Bearbeitungsmaschine aus einem Materialblock herausgearbeitet wird,
- FIG 2: eine schematische vereinfachte Darstellung zur Illustration einer Generierung von Bewegungsbahnen für die Bearbeitungsmaschine auf Basis von Geometriedaten des jeweiligen Werkstücks,
- FIG 3: eine Veranschaulichung von beim Herstellen eines Werkstücks durch die Bearbeitungsmaschine abgefahrenen Bewegungsbahnen und
- FIG 4: eine schematisch vereinfachte Darstellung einer Steuerungseinrichtung für eine Bearbeitungsmaschine mit einem dort vorgehaltenen Steuerungsprogramm, das eine Implementierung des nachfolgend mit weiteren Details beschriebenen Verfahrens zum Betrieb der Bearbeitungsmaschine umfasst.

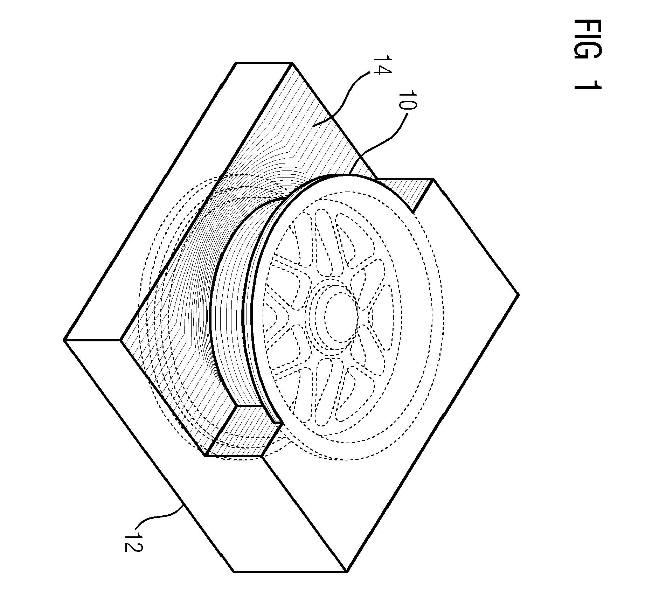

FIG 1 zeigt schematisch vereinfacht ein Werkstück 10, das mittels einer nicht dargestellten, aber an sich bekannten Fräsmaschine als Beispiel für eine Bearbeitungsmaschine aus einem Materialblock 12 herausgearbeitet wird. Dabei werden mit der Fräsmaschine, nämlich einem von der Fräsmaschine jeweils geführten Werkzeug, also zum Beispiel einem Fräser, Abtragsbahnen 14 (Bewegungsbahnen) abgefahren, deren Verlauf sich aufgrund von Geometriedaten des zu produzierenden Werkstücks 10 ergibt.

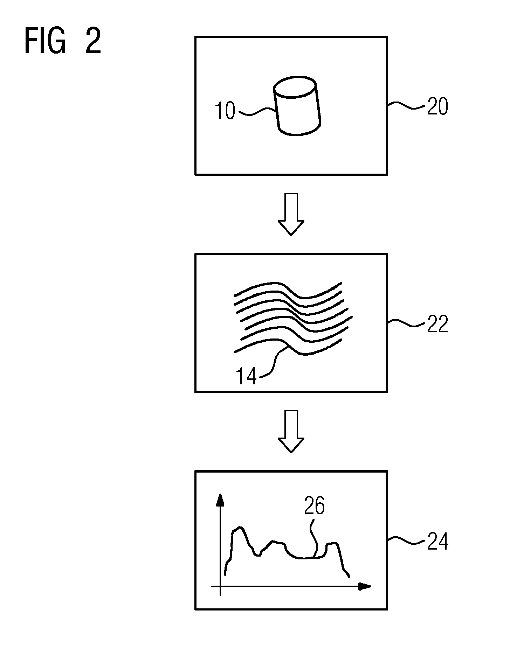

FIG 2 zeigt, dass sich diese Geometriedaten 20 aufgrund einer Planung des Werkstücks 10 - hier schematisch vereinfacht als Zylinder dargestellt - mit an sich bekannten CAD-/CAM-Werkzeugen ergeben. Diese Geometriedaten 20 werden entweder vor der Übermittlung an die Bearbeitungsmaschine oder durch eine Steuerungseinrichtung der Bearbeitungsmaschine selbst in Daten für einzelne Bewegungsbahnen 14 umgesetzt, die in FIG 2 schematisch vereinfacht und ohne direkten Bezug zu dem hier zylindrisch dargestellten Werkstück 10 als Ergebnis einer Bahnplanung 22 gezeigt sind.

Die Ergebnisse der Bahnplanung 22 werden daraufhin in an sich bekannter Art und Weise einer ebenfalls nur schematisch vereinfacht dargestellten Steuerungseinrichtung 24 der jeweiligen Bearbeitungsmaschine zugeführt. Diese ermittelt daraus Bewegungsprofile für die einzelnen Achsen, nämlich Geschwindigkeits- und/oder Beschleunigungsprofile 26 für jede einzelne Achse, so dass auf Basis dieser Profile 26 eine jeweilige Ansteuerung der von der Bearbeitungsmaschine umfassten Achsen erfolgen kann. Insgesamt ergibt sich damit für den Tool Center Point der Bearbeitungsmaschine eine Bewegung entlang der jeweils geplanten Bewegungsbahn 16. Die Bewegung und die Bahn, der eine solche Bewegung folgt (Bewegungsbahn), kann bei einer formgebenden Bearbeitung des jeweiligen Werkstücks 10 im Sinne eines Abtrags von Material eines Materialblocks 12, um nämlich aus diesem das Werkstück 10 herauszuarbeiten, auch als Abtragsbahnen 14 bezeichnet werden.

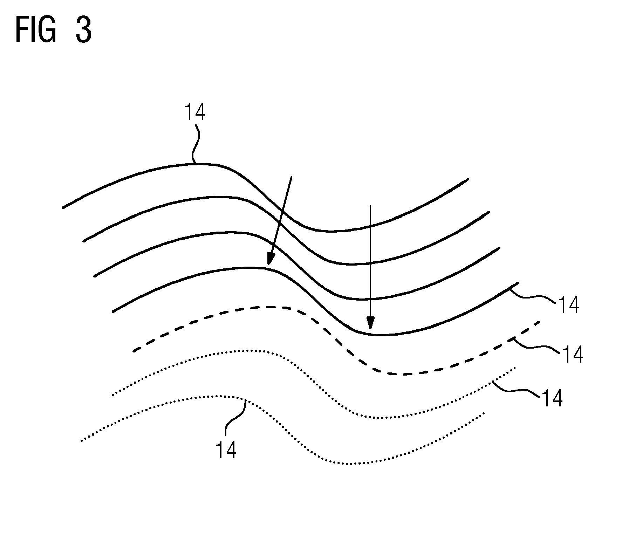

FIG 3 versucht auf Basis einer Vergrößerung der in FIG 2 exemplarisch gezeigten Bewegungsbahnen/Abtragsbahnen 14 das Prinzip der Berücksichtigung von Geometriedaten benachbarter Bewegungsbahnen 14 beim Abfahren einer Bewegungsbahn 14 zu veranschaulichen. In FIG 3 sind einzelne Bewegungsbahnen 14 mit durchgezogenen Linien und andere Bewegungsbahnen 14 als gestrichelte und gepunktete Linien gezeichnet. Die durchgezogenen Linien sollen bereits abgefahrene Bewegungsbahnen 14 darstellten. Die gepunkteten Linien sollen noch abzufahrende Bewegungsbahnen 14 darstellen. Die gestrichelt gezeichnete Linie stellt eine momentan abzufahrende Bewegungsbahn 14 dar und sie befindet sich entsprechend zwischen der letzten abgefahrenen Bewegungsbahn 14 (durchgezogene Linie) und der ersten noch nicht abgefahrenen Bewegungsbahn 14 (gepunktete Linie).

Man erkennt, dass es beim Abfahren einer Bewegungsbahn 14 (gestrichelte Linie) sinnvoll sein kann, Geometriedaten der bereits abgefahrenen Bewegungsbahnen 14 (durchgezogene Linien), zumindest der unmittelbar vorher abgefahrenen Bewegungsbahn 14 (unmittelbar angrenzende durchgezogene Linie), zu berücksichtigen, speziell auch dann, wenn die Bewegungsbahnen 14 (Abtragsbahnen) wechselweise mal von links nach rechts und mal von rechts nach links abgefahren werden. Dafür werden entweder Geometriedaten des jeweils herzustellenden Werkstücks 10 oder Geometriedaten und sonstige Attribute mit Ortsbezug zu den abgefahrenen Bewegungsbahnen 14 berücksichtigt. Wenn die Geometriedaten gleichsam Basis für die Sollwerte der abzufahrenden Bewegungsbahnen 14 sind, werden mit den Geometriedaten der abgefahrenen Bewegungsbahnen 14 die tatsächlichen Istwerte berücksichtigt. Die Verwendung beider Datenbasis (Soll- und Istwerte) ist möglich, wobei auch eine Kombination beider Datenbasis, zum Beispiel in Form einer Mittelwertbildung, in Betracht kommt. Diese Berücksichtigung ist ohne Weiteres möglich, wenn die Steuerungseinrichtung 24 der Bearbeitungsmaschine dafür über entsprechende Geometriedaten des jeweils herzustellenden Werkstücks 10 verfügt, denn die Geometriedaten sind der Ursprung der jeweiligen Bewegungsbahnen 14 und damit auch der Ursprung bereits abgefahrener Bewegungsbahnen 14.

Zusätzlich oder alternativ zur der Berücksichtigung bereits abgefahrener Bewegungsbahnen 14 ist auch eine Art "Blick in die Tiefe" und zwar zur Sollfertigteilgeometrie vorgesehen. Dafür werden dann auch noch nicht abgefahrene Bewegungsbahnen und/oder die Geometriedaten des jeweils herzustellenden Werkstücks 10 berücksichtigt. Die Sollfertigteilgeometrie ist für den abschließenden sogenannten Schlichtschnitt eine wesentliche Informationsquelle. Auf diese Weise lassen sich beste Abtragsverhältnisse, wie zum Beispiel konstante Abtragsvolumina oder eine konstante Abtragsleistung beim letzten Schnitt, schaffen. Solche konstanten Abtragsvolumina und/oder eine konstante Abtragsleistung beim letzten Schnitt lassen sich bzw. lässt sich erreichen, wenn beim Vordringen in die Tiefe die Geometrie der aufeinander folgenden Abtragsbahnen so bestimmt wird, dass sich für eine letzte Abtragsbahn vor der Sollfertigteilgeometrie durchgehend gleiche Stärken des noch abzutragenden Materials ergeben. Als Abtragsleistung wird dabei das Abtragsvolumen pro Zeit verstanden.

Zusätzlich können auch beim Abfahren einer Bewegungsbahn 14 jeweils mit Ortsbezug gespeicherte Echtzeiteinflüsse vorangehender Bewegungsbahnen 14 berücksichtigt werden. Solche Echtzeiteinflüsse können sich zum Beispiel bei Richtungsänderungen der Bewegungsbahn 14 ergeben und mögliche Stellen, an denen es zu solchen Echtzeiteinflüssen kommen kann, also unbeabsichtigten, oftmals geringfügigen oder minimalen Abweichungen von einer der tatsächlichen Bewegungsbahn 14 zugrunde liegenden Sollbahn, sind in FIG 3 mit den beiden Pfeilen bezeichnet.

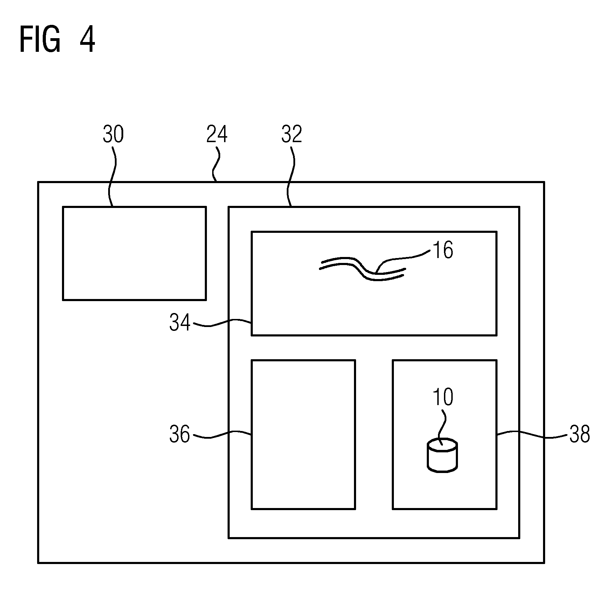

FIG 4 zeigt die Steuerungseinrichtung 24 einer Bearbeitungsmaschine, also zum Beispiel einer Fräsmaschine oder dergleichen, mit weiteren Details. Danach umfasst die Steuerungseinrichtung 24 mindestens eine Verarbeitungseinheit 30 in Form von oder nach Art mindestens eines Mikroprozessors oder dergleichen sowie einen Speicher 32 oder Zugriff auf einen externen Speicher, in den ein NC-Programm 34 mit einer Beschreibung von Bewegungsbahnen 14 für die formgebende Bearbeitung des jeweiligen Werkstücks 10 geladen ist.

Das NC-Programm 34 kann dabei lokal oder entfernt vorliegen und vom jeweiligen Speicherort, also zum Beispiel einem dafür eingebundenen Laufwerk (gemountetes Laufwerk) oder einer Werkstück-/Fertigungs-Daten-Cloud, abgearbeitet werden. Es ist allerdings günstig, wenn auch nicht notwendig, wenn die Geometriedaten oder das mitgeführte Modell lokal vorliegen.

Zur Abarbeitung des NC-Programms 34 ist in den Speicher 32 und zur Ausführung durch die Verarbeitungseinheit 30 ein Steuerungsprogramm 36 geladen, das bei der Abarbeitung des NC-Programms 34 ein sukzessives Abfahren der Bewegungsbahnen 14 gemäß dem NC-Programm 34 bewirkt. Die Berücksichtigung benachbarter Geometriedaten, wie dies beim Ansatz gemäß der Erfindung vorgesehen ist, erfolgt entweder, indem aus dem NC-Programm 34 beim Abfahren einer Bewegungsbahn 16 die Geometriedaten vorangehender Bewegungsbahnen 16, insbesondere der unmittelbar zuvor abgefahrenen Bewegungsbahn 16, berücksichtigt werden, und/oder indem die Steuerungseinrichtung 24 Zugriff auf die den Bewegungsbahnen 16 zugrunde liegenden Geometriedaten zur Beschreibung des Werkstücks 10 hat. Letzteres ist in FIG 4 durch die nochmalige, vereinfachte Darstellung des Werkstücks 10 als Zylinder verdeutlicht und ist als Darstellung einer Datenbasis 38 mit Geometriedaten aufzufassen, die als Geometriedaten, die beim Abfahren einer Bewegungsbahn 14 berücksichtigt werden, einen Datensatz oder eine Mehrzahl von Datensätzen mit solchen Geometriedaten umfasst. Das Steuerungsprogramm 36 ist damit ein Beispiel für ein Computerprogramm zur Implementierung des Verfahrens wie hier beschrieben.

Obwohl die Erfindung im Detail durch das Ausführungsbeispiel näher illustriert und beschrieben wurde, so ist die Erfindung nicht durch das oder die offenbarten Beispiele eingeschränkt und andere Variationen können vom Fachmann hieraus abgeleitet werden, ohne den Schutzumfang der Erfindung zu verlassen.

Einzelne im Vordergrund stehende Aspekte der hier eingereichten Beschreibung lassen sich damit kurz wie folgt zusammenfassen: Angegeben werden eine Verfahren und ein Computerprogramm zur Implementierung des Verfahrens zum Betrieb einer Bearbeitungsmaschine zur formgebenden Bearbeitung von Werkstücken 10, wobei die Bearbeitungsmaschine und die davon umfassten Achsen von einer Steuerungseinrichtung 24 gesteuert werden, wobei die Steuerungseinrichtung 24 eine Verarbeitungseinheit 30 und einen Speicher 32, in den ein NC-Programm 34 mit einer Beschreibung von Bewegungsbahnen 16 für die formgebende Bearbeitung des jeweiligen Werkstücks 10 geladen ist, umfasst, wobei bei der formgebenden Bearbeitung des jeweiligen Werkstücks 10 unter Kontrolle der Steuerungseinrichtung 24 sukzessive benachbarte Bewegungsbahnen 16 abgefahren werden und wobei beim Abfahren einer Bewegungsbahn 16 Geometriedaten benachbarter Bewegungsbahnen 16, insbesondere von zur Seite und in der Tiefe benachbarten Bewegungsbahnen 16, berücksichtigt werden. Bei in der Tiefe benachbarten Bewegungsbahnen geht es vor allem um einen mehrschnittigen Materialabtrag. Dabei werden vor einer Bewegungsbahn 16 in unmittelbarer Nähe der Fertigteilgeometrie oder einer Schlicht-Abtragsbahn ein oder mehrere Bewegungsbahnen 16 abgefahren um dem Rohling eine Kontur zu verleihen, die anschließend die endgültige Formgebung ermöglicht. Dabei ist es günstig, wenn die insofern in der Tiefe sukzessive aufeinander folgenden Bewegungsbahnen 16 und die resultierenden Abtragsbahnen so aufeinander abgestimmt sind, dass sich für eine oder mehrere Bewegungsbahnen 16 in der Nähe der Fertigteilgeometrie, insbesondere eine letzte Bewegungs-/Abtragsbahn 16 zum Erhalt der Fertigteilgeometrie, konstante Abstragsvolumina ergeben, weil dann der Materialabtrag besonders gleichmäßig erfolgt und entsprechend der Verlauf der Bewegung entlang der Bewegungsbahn ebenfalls besonders gleichmäßig und kontinuierlich ist.

## Patentansprüche

1. Verfahren zum Betrieb einer Bearbeitungsmaschine zur formgebenden Bearbeitung von Werkstücken (10),
wobei die Bearbeitungsmaschine und die davon umfassten Achsen von einer Steuerungseinrichtung (24) gesteuert werden,
wobei die Steuerungseinrichtung (24) eine Verarbeitungseinheit (30) und einen Speicher (32) umfasst oder Zugriff auf einen Speicher hat, in den ein NC-Programm (34) mit einer Beschreibung von Bewegungsbahnen (16) für die formgebende Bearbeitung des jeweiligen Werkstücks (10) geladen ist,
wobei bei der formgebenden Bearbeitung des jeweiligen Werkstücks (10) unter Kontrolle der Steuerungseinrichtung (24) sukzessive benachbarte Bewegungsbahnen (16) abgefahren werden,
**dadurch gekennzeichnet, dass** beim Abfahren einer Bewegungsbahn (16) Geometriedaten benachbarter Bewegungsbahnen (16) berücksichtigt werden.

2. Verfahren nach Anspruch 1, wobei beim Abfahren einer Bewegungsbahn (16) jeweils mit Ortsbezug gespeicherte Echtzeiteinflüsse vorangehender Bewegungsbahnen (16) berücksichtigt werden.

3. Verfahren nach Anspruch 1 oder 2, wobei zum Berücksichtigen von Geometriedaten benachbarter Bewegungsbahnen (16) die Steuerungseinrichtung (24) im NC-Programm (34) ein 3D-Modell des Werkstücks (10) mitführt.

4. Verfahren nach Anspruch 1, 2 oder 3, wobei zum Berücksichtigen von Geometriedaten benachbarter Bewegungsbahnen (16) die Steuerungseinrichtung (24) Dynamik-, Kompensations- und/oder Technologieattribute zu bereits abgefahrenen Bewegungsbahnen (16) mitführt und wobei beim Abfahren einer Bewegungsbahn (16) zumindest diese Dynamik-, Kompensations- und/oder Technologieattribute der unmittelbar vorangehenden Bewegungsbahn (16) berücksichtigt werden.

5. Verfahren nach Anspruch 1, 2, 3 oder 4, wobei beim Abfahren einer Bewegungsbahn (16) Geometriedaten benachbarter, noch nicht abgefahrener Bewegungsbahnen (16) berücksichtigt werden, insbesondere anhand einer attributierten Sollfertigteilgeometrie, die die Basis für die Bewegungsbahnen (16) und damit auch für die noch nicht abgefahrenen Bewegungsbahnen (16) bildet.

6. Verfahren nach einem der vorangehenden Ansprüche, wobei die Berücksichtigung von Geometriedaten benachbarter Bewegungsbahnen (16) beim Abfahren einer Bewegungsbahn (16) bei einem mehrschnittigen Materialabtrag auch Bewegungsbahnen (16) in der Tiefe umfasst.

7. Verfahren nach Anspruch 6, wobei im Rahmen der Berücksichtigung von Geometriedaten benachbarter Bewegungsbahnen (16) bei einem mehrschnittigen Materialabtrag die in der Tiefe benachbart aufeinander folgenden Bewegungsbahnen (16) so aufeinander abgestimmt sind, dass sich für eine letzte Bewegungsbahn (16) ein konstantes oder zumindest im Wesentlichen konstantes Abtragsvolumen oder eine konstante oder zumindest im Wesentlichen konstante Abtragsleistung ergibt.

8. Computerprogramm mit Programmcodemitteln, um alle Schritte von jedem beliebigen der Ansprüche 1 bis 7 durchzuführen, wenn das Programm auf einer Steuerungseinrichtung (24) für eine Bearbeitungsmaschine ausgeführt wird.

9. Digitales Speichermedium, mit elektronisch auslesbaren Steuersignalen, die so mit einer programmierbaren Steuerungseinrichtung (24) für eine Bearbeitungsmaschine zusammenwirken können, dass ein Verfahren nach einem der Ansprüche 1 bis 7 ausgeführt wird.

10. Steuerungseinrichtung (24) für eine Bearbeitungsmaschine mit einer Verarbeitungseinheit (30) und einem Speicher (32), in den ein Computerprogramm nach Anspruch 8 geladen ist, das im Betrieb der Steuerungseinrichtung (24) durch deren Verarbeitungseinheit (30) ausgeführt wird.
